# EUROPÄISCHE PATENTSCHRIFT

(11) **EP 1 159 867 B1**
(45) Veröffentlichungstag und Bekanntmachung des Hinweises auf die Patenterteilung: **26.10.2005**
(21) Anmeldenummer: 01112702.4
(22) Anmeldetag: 25.05.2001
(51) Int. Cl.: A01F 12/26

(54) **Dreschkorb für einen Mähdrescher mit Segmentierung**
Segmented concave for a combine
Contre-batteur segmenté pour une moissonneuse-batteuse

(30) Priorität: 02.06.2000 DE 10027450
(43) Veröffentlichungstag der Anmeldung: 05.12.2001
(73) Patentinhaber: SAME DEUTZ-FAHR GROUP S.p.A., 24047 Treviglio (Bergamo) (IT)
(72) Erfinder: Berghorn, Hermann, 89426 Wittislingen (DE)
(74) Vertreter: Quinterno, Giuseppe

(56) Entgegenhaltungen:
- EP-A- 0 396 968
- DE-A- 3 626 046
- DE-U- 29 820 700
- FR-A- 1 270 912
- DATABASE WPI Section PQ, Week 199440 Derwent Publications Ltd., London, GB; Class P12, AN 1994-323617 XP002174727 & SU 1 819 128 A (ROST AGRIC ENG INST), 30. Mai 1993 (1993-05-30)

## Beschreibung

Die Erfindung betrifft einen Dreschkorb für ein Dreschwerk eines Mähdreschers laut dem Oberbegriff des anhängenden Anspruchs 1.

Ein solcher Dreschkorb ist in der DATABASE WPI, Section PQ, Week 199440 Derwent Publications Ltd., London, GB; Class P12, AN 1994-323617 XP002174727 & SU 1 819 128 A (ROST AGRIC ENG INST) 30. Mai 1993 (1993-05-30) gezeigt.

Der Erfindung liegt die Aufgabe zugrunde einen verbesserten Dreschkorb für ein Dreschwerk bereitzustellen, das optimal auf das zu dreschende Getreide eingestellt werden kann und ein sogenanntes "scharfes" Dreschen ermöglicht.

Diese Aufgabe wird erfindungsgemäß gelöst durch einen Dreschkorb, der die in Anspruch 1 definierten Merkmale aufweist.

Bei einer Variante der Erfindung ist vorgesehen, dass der Dreschkorb einen Rahmen aufweist, dass der Rahmen aus zwei seitlich angeordneten Wangen und mindestens einem die Wangen verbindenden Verbindungselement besteht und dass der Rahmen Führungselemente und mindestens ein Verriegelungselement für die Segmente aufweist, so dass durch die Führungselemente die axiale und radiale Position der Segmente relativ zur Dreschtrommel bestimmt wird und somit ohne nachträgliche Justage die Segmente in den Rahmen eingeführt werden können. Das mindestens eine Verriegelungselement stellt sicher, dass im Betrieb die Segmente nicht aus dem Rahmen gleiten können. Außerdem verspannen sie die Segmente untereinander und verhindern so Relativbewegungen der Segmente und stabilisieren den Dreschkorb.

Bei einer Ausgestaltung der Erfindung sind die Führungselemente konzentrisch zur Drehachse der Dreschtrommel an den Wangen angebrachte Profilstäbe, insbesondere Rundstäbe, so dass auf einfache Weise und unempfindlich gegenüber Verschmutzungen die Segmente an den Wangen fixiert werden können. Bei dieser Ausführungsform tragen auch die Wangen zur axialen Fixierung der Segmente bei.

In Ergänzung der Erfindung sind die Führungselemente konzentrisch zur Drehachse der Dreschtrommel verlaufende Nuten in den Wangen, so dass eine hochbelastbare und äußerst präzise Führung der Segmente ermöglicht wird.

Bei einer anderen Ausgestaltung der Erfindung ist das mindestens eine Verriegelungselement eine auf die Segmente wirkende Schraubverbindung, so dass auf einfachste Weise eine große Verspannungskraft zwischen Rahmen und den Segmenten aufgebracht werden kann, die zusätzlich eine große Sicherheit gegenüber unbeabsichtigtem Lösen der Verriegelungselemente bietet.

In weiterer Ergänzung der Erfindung sind die Segmente entlang der Teilungslinie formschlüssig, insbesondere durch Zentrierstifte und Zentrierbohrungen, verbunden, so dass die relative Lage der Segmente zueinander unter allen Belastungsbedingungen gewährleistet ist.

Bei einer anderen Ausführungsform der Erfindung weisen die Segmente einen umlaufenden Segmentrahmen sowie parallel zur Drehachse der Dreschtrommel verlaufende Dreschleisten und senkrecht dazu verlaufende Drähte auf, so dass auf einfache und kostengünstige Weise ein optimales Druschergebnis erzielbar ist.

Weitere Ausgestaltungen der Erfindung sehen vor, dass in das, in Drehrichtung der Dreschtrommel gesehen, erste Segment ein geschlossenes Reibblech einlegbar ist oder dass das erste Segment als geschlossenes Reibblech ausgeführt ist, so dass insbesondere schwer entgrannbare Getreide durch die Reibwirkung zwischen Reibblech und Dreschtrommel entgrannt und somit das Druschergebnis verbessert wird.

Bei einer anderen Ausgestaltung der Erfindung sind die Abstände der Dreschleisten zueinander verschieden, so dass auch dieser Parameter zur Optimierung der Druschbedingungen genutzt werden kann.

In weiterer Ergänzung der Erfindung ist der radiale Abstand von Dreschkorb und Dreschtrommel einstellbar, so dass je nach Getreide und Feuchtigkeit des Getreides das Dreschwerk optimal auf die aktuellen Druschbedingungen eingestellt werden kann.

Bei einer weiteren Ausgestaltung der Erfindung ist vorgesehen, dass das Verbindungselement des Rahmens, in Drehrichtung der Dreschtrommel gesehen, am hinteren Ende der Wangen angeordnet ist und dass das mindestens eine Verriegelungselement am vorderen Ende mindestens einer Wange angeordnet ist, so dass die Segmente einfach nach vorne herausnehmbar sind und außerdem das Verspannen von Rahmen und Segmenten durch mindestens ein gut zugängliches Verriegelungselement ermöglicht wird.

Weitere Vorteile und vorteilhafte Ausgestaltungen der Erfindung sind der nachfolgenden Beschreibung, der Zeichnung und den Ansprüchen entnehmbar.

Ein Ausführungsbeispiel des Gegenstands der Erfindung ist in der Zeichnung dargestellt und im Folgenden näher beschrieben. Es zeigen:
- Fig. 1: einen Längsschnitt durch einen Mähdrescher;
- Fig. 2: eine Seitenansicht eines erfindungsgemäßen Rahmens;
- Fig. 3: eine Draufsicht auf einen erfindungsgemäßen Rahmen;
- Fig. 4: eine Draufsicht auf einen erfindungsgemäßen Rahmen mit einem eingesetzten Segment; und
- Fig. 5: eine Seitenansicht eines erfindungsgemäßen Rahmens mit eingesetzten und verspannten Segmenten.

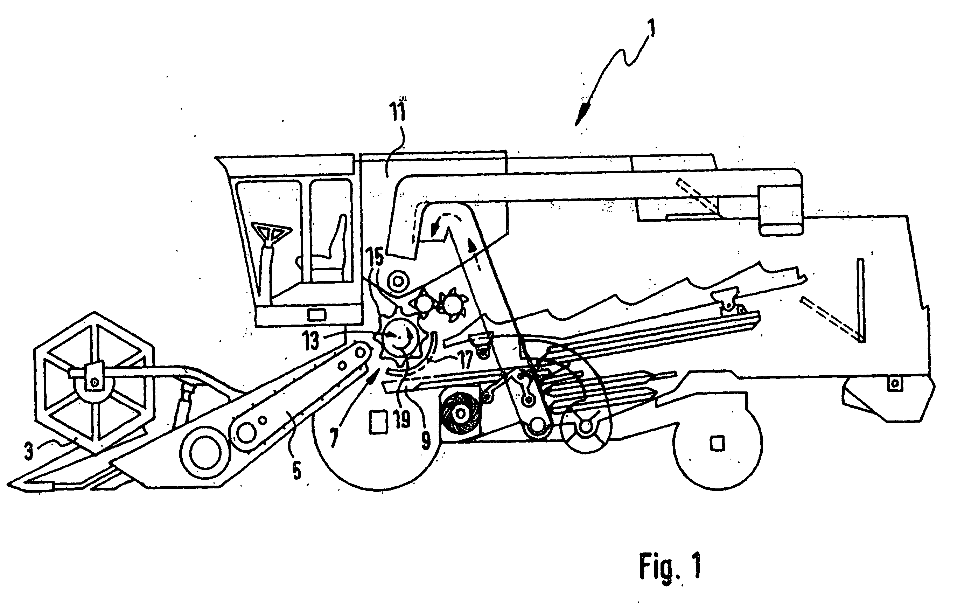

Fig. 1 zeigt einen Längsschnitt eines Mähdreschers 1. Das in Fig. 1 nicht dargestellte Getreide wird von einem Schneidwerk 3 geschnitten und über einen Förderkanal 5 dem Dreschwerk 7 zugeführt. Das ausgedroschene Getreide fällt in ein Sieb 9 und wird schließlich in einen Korntank 11 gefördert.

Das Dreschwerk 7 besteht aus einer Dreschtrommel mit Schlagleisten 15 und einem Dreschkorb 17. Die Drehrichtung der Dreschtrommel 13 ist durch einen Pfeil 19 angedeutet. Der Dreschkorb 17 besteht aus einem in Fig. 1 nicht gesondert dargestellten Rahmen und mehreren Segmenten.

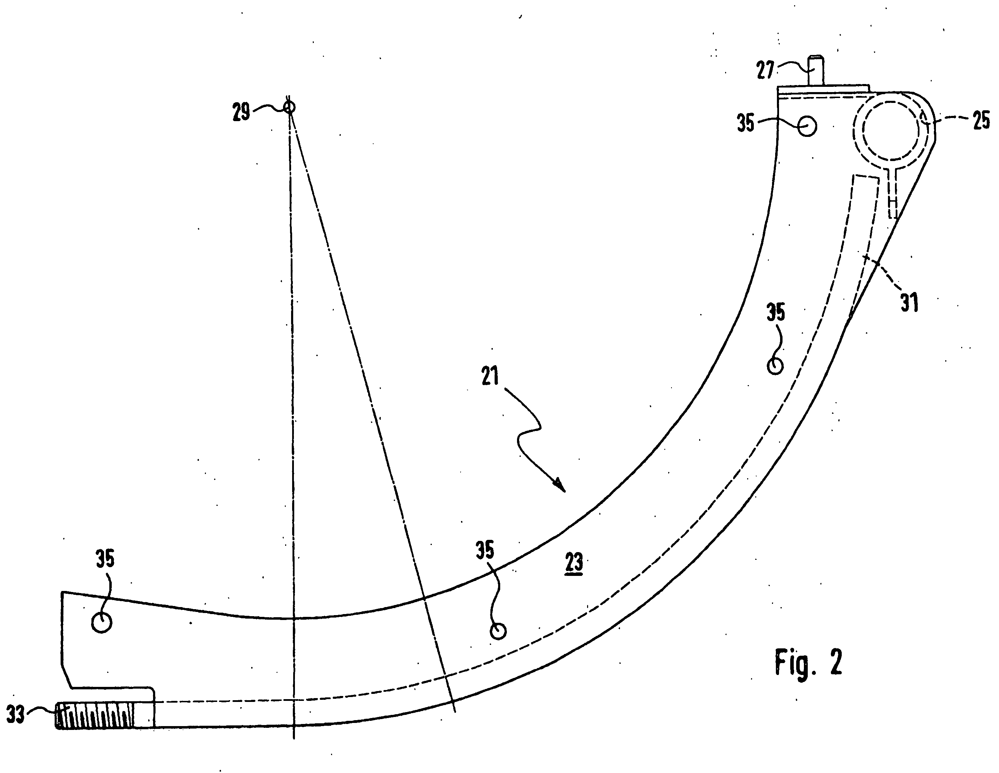

In Fig. 2 ist eine Seitenansicht eines Rahmens 21 dargestellt. Der Rahmen 21 ist so dargestellt, wie er in einem Mähdrescher gemäß Fig. 1 eingebaut wird. Der Rahmen besteht aus zwei Wangen 23, von denen in Fig. 2 nur eine sichtbar ist. Die beiden Wangen 23 werden durch ein rohrförmiges Verbindungselement 25 zusammengehalten. Mittels Stehbolzen 27 kann der Rahmen mit den, in Förderrichtung des Strohs gesehen, nachgeschalteten, in Fig. 1 nicht dargestellten Baugruppen verschraubt werden.

Die Wangen 23 weisen eine Krümmung auf, wobei der Krümmungsmittelpunkt 29 nahezu der gesamten Krümmung in eingebautem Zustand mit der Drehachse der in Fig. 2 nicht dargestellten Dreschtrommel 13 zusammenfällt. Auf der Innenseite der Wangen 23, und deswegen gestrichtelt dargestellt, sind die Führungsleisten 31, auf denen die in Fig. 2 nicht dargestellten Segmente aufliegen können. Ein weiterer Stehbolzen 33 dient dazu, die auf der Führungsleiste 31 aufliegenden, nicht dargestellten Segmente untereinander und mit dem Rahmen 21 zu verspannen. Der Rahmen ist mittels Bohrungen 35 relativ zur Drehachse der Dreschtrommel bewegbar mit dem Mähdrescher verbunden. Durch die Verstellmöglichkeit des Rahmens 21 relativ zur Drehachse der Dreschtrommel kann das Dreschwerk auf unterschiedliche Getreidearten optimal eingestellt werden.

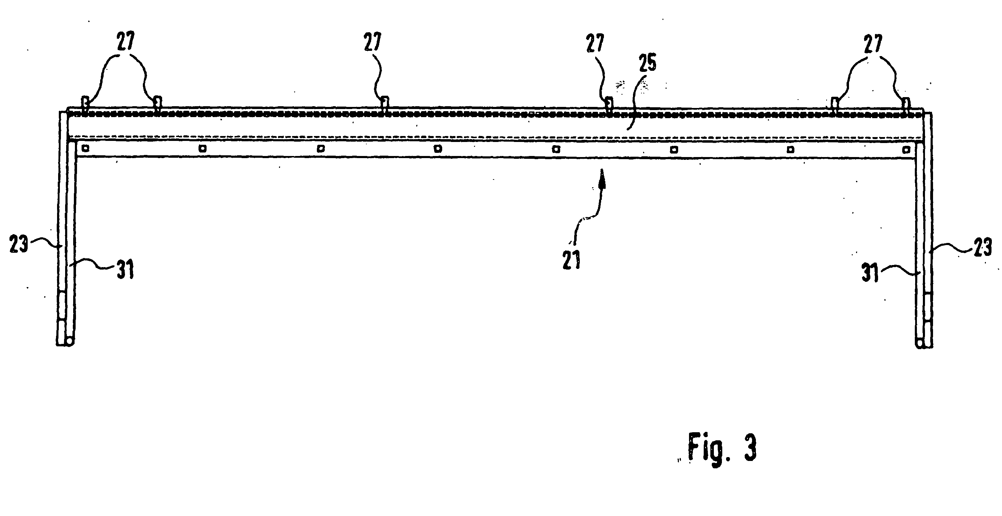

In Fig. 3 ist ein Rahmen 21 in der Draufsicht dargestellt. Gleiche Bauelemente sind mit gleichen Bezugszeichen versehen und werden nicht nochmals beschrieben. In den Rahmen 21 ist kein Segment eingebaut.

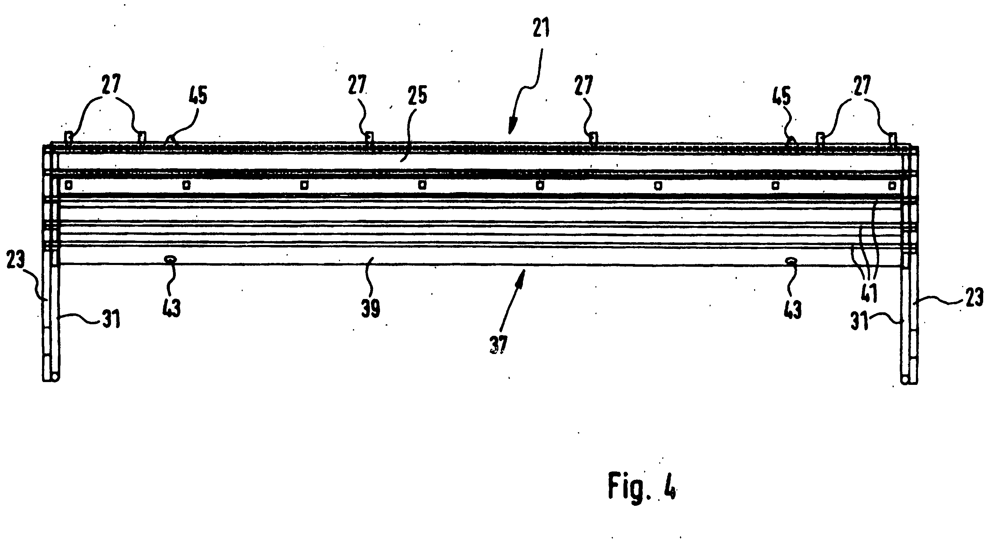

In Fig. 4 ist in den Rahmen 21 ein Segment 37 eingeführt. Das Segment 37 besteht aus einem umlaufenden Segmentrahmen 39, von dem in Fig. 4 nur eine Längsseite sichtbar ist. Entlang dieser Längsseite verläuft eine Teilungslinie 40 zwischen den Segmenten. Des Weiteren weist das Segment 37 drei Dreschleisten 41 auf, die sich in eingebautem Zustand parallel zur Drehachse der Dreschtrommel 13 erstrecken. Im Segmentrahmen 39 sind zwei Zentrierbohrungen 43 erkennbar, in die entsprechende Zentrierstifte eines nicht dargestellten zweiten Segments einschiebbar sind, so dass eine formschlüssige Verbindung zwischen den Segmenten entsteht. Das Segment 37 ist mit Zentrierstiften 45 mit dem Verbindungselement 25 des Rahmens 21 formschlüssig verbunden.

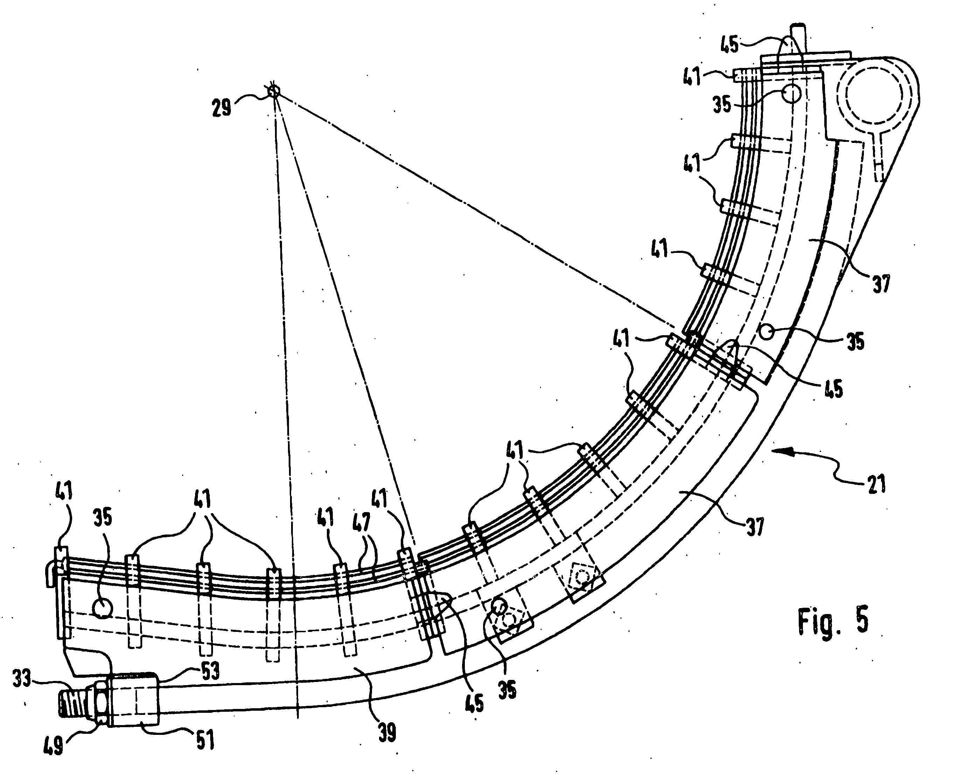

In Fig. 5 ist eine Seitenansicht eines mit Segmenten 37 und 39 bestückten Rahmens 21 dargestellte. In dieser Darstellung ist zu erkennen, dass zwischen den Dreschleisten 41 Drähte 47 verlaufen, welche zusammen mit den Dreschleisten 41 eine siebförmige Struktur ergeben. Abmessungen, Zahl und Abstand der Dreschleisten 41 zueinander sowie der Drähte 47 zueinander bestimmen maßgeblich die Verwendung der Segmente 37 und 39 für ein bestimmtes Getreide. So ist beispielsweise der Abstand der Drähte 47 zueinander bei einem Segment 37 oder 39, welches zum Maisdreschen eingesetzt wird größer, als bei einem Segment 37 oder 39, welches zum Dreschen von Weizen eingesetzt wird.

In Fig. 5 ist erkennbar, dass das erste Segment 39 stärker gekrümmt ist und somit in eingebautem Zustand der Abstand zwischen den Dreschleisten 41 des Segments 39 und der Dreschtrommel geringer ist als der Abstand zwischen den übrigen Segmenten 37 und der Dreschtrommel. Dadurch wird ein sogenanntes "scharfes" Dreschen erreicht. Je nach Einsatzzweck der Segmente 37 und 39 können diese mehr oder weniger hoch gebaut sein, so dass sich mit dem Einbau der Segmente 37 und 39 ein für die zu dreschende Getreideart optimaler Abstand zwischen Dreschtrommel und Dreschleisten 41 einstellt. Dazu muss der Rahmen 21 nicht verschoben werden, und es sind somit keine nachträglichen Justagearbeiten vonnöten.

In Fig. 5 ist ebenfalls zu erkennen, dass auf den Stehbolzen 33 eine Mutter 49 sowie eine Hülse 51 angeordnet sind. Durch Anziehen der Mutter 49 drückt die Hülse 51 auf einen Absatz 53 des ersten Segments 39 und verspannt somit alle Segmente 37 und 39 sowohl untereinander als auch mit dem Rahmen 21.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Dreschkorb für ein Dreschwerk (7) eines Mähdreschers (1), wobei das Dreschwerk (7) eine Dreschtrommel (13) und einen Dreschkorb (17) aufweist, wobei der Dreschkorb (17) eine im wesentlichen koaxial zur Drehachse der Dreschtrommel (13) gekrümmte Dreschkorbfläche aufweist und wobei die Dreschkorbfläche in mindestens zwei Segmente (37, 39) aufgeteilt ist und die Teilungslinie (40) zwischen den mindestens zwei Segmenten (37, 39) im wesentlichen parallel zur Drehachse der Dreschtrommel (13) verläuft;
**dadurch gekennzeichnet, dass** der radiale Abstand der Segmente (37, 39), insbesondere von deren Dreschleisten (41), zur Dreschtrommel (13) unterschiedlich ist, und dass das in Drehrichtung (19) der Dreschtrommel (13) gesehen erste Segment (39) mindestens eine in Richtung der Drehachse der Dreschtrommel (13) hochgezogene Dreschleiste (41) aufweist.

2. Dreschkorb nach Anspruch 1, **dadurch gekennzeichnet, dass** der Dreschkorb (17) einen Rahmen (21) aufweist, dass der Rahmen (21) aus zwei seitlich angeordneten Wangen (23) und mindestens einem die Wangen (23) verbindenden Verbindungslement (25) besteht, und dass der Rahmen (21) Führungselemente (31) und mindestens ein Verriegelungselement (33, 49, 51) für die Segmente (37, 39) aufweist.

3. Dreschkorb nach Anspruch 2, **dadurch gekennzeichnet, dass** die Führungselemente (31) konzentrisch zur Drehachse der Dreschtrommel (13) an den Wangen (23) angebrachte Profilstäbe (31), insbesondere Rundstäbe, sind.

4. Dreschkorb nach Anspruch 2, **dadurch gekennzeichnet, dass** die Führungselemente (31) konzentrisch zur Drehachse der Dreschtrommel (13) verlaufende Nuten in den Wangen (23) sind.

5. Dreschkorb nach einem der vorhergehenden Ansprüche, **dadurch gekennzeichnet, dass** das mindestens eine Verriegelungselement eine auf die Segmente (37, 39) wirkende Schraubverbindung (33, 49, 51) ist.

6. Dreschkorb nach einem der vorhergehenden Ansprüche, **dadurch gekennzeichnet, dass** die Segmente (37, 39) entlang der Teilungslinie (40) formschlüssig, insbesondere durch Zentrierstifte (45) und Zentrierbohrungen (43), verbunden sind.

7. Dreschkorb nach einem der vorhergehenden Ansprüche, **dadurch gekennzeichnet, dass** die Segmente (37, 39) einen umlaufenden Segmentrahmen (39) sowie parallel zur Drehachse der Dreschtrommel (13) verlaufende Dreschleisten (41) und senkrecht dazu verlaufende Drähte (47) aufweisen.

8. Dreschkorb nach einem der vorhergehenden Ansprüche, **dadurch gekennzeichnet, dass** in das in Drehrichtung (19) der Dreschtrommel (13) gesehen erste Segment (39) ein geschlossenes Reibblech einlegbar ist.

9. Dreschkorb nach einem der Ansprüche 1 bis 7, **dadurch gekennzeichnet, dass** in das in Drehrichtung (19) der Dreschtrommel (13) gesehen erste Segment (39) als geschlossenes Reibblech ausgeführt ist.

10. Dreschkorb nach einem der Ansprüche 7 bis 9, **dadurch gekennzeichnet, dass** die Abstände der Dreschleisten (41) zueinander verschieden sind.

11. Dreschkorb nach einem der vorhergehenden Ansprüche, **dadurch gekennzeichnet, dass** der radiale Abstand von Dreschkorb (17) und Dreschtrommel (13) einstellbar ist.

12. Dreschkorb nach einem der Ansprüche 2 bis 11, **dadurch gekennzeichnet, dass** das Verbindungselement (25) des Rahmens (21) in Drehrichtung (19) der Dreschtrommel (13) gesehen am hinteren Ende der Wangen (23) angeordnet ist, und dass das mindestens eine Verriegelungselement (33, 49, 51) am vorderen Ende mindestens einer Wange (23) angeordnet ist.

## Revendications

1. Cage de battage pour un mécanisme batteur (7) d'une moissonneuse-batteuse (1) dans laquelle :
- le mécanisme batteur (7) présente un tambour de battage (13) et une cage de battage (17) ;
- la cage de battage (17) présente une surface de cage courbée essentiellement coaxialement par rapport à l'axe de rotation du tambour de battage (13) ; et
- la surface de la cage de battage est divisée en au moins deux segments (37, 39) et la ligne de division (40) entre lesdits au moins deux segments (37, 39) s'étend essentiellement parallèlement à l'axe de rotation du tambour de battage (13),
**caractérisée en ce que** la distance radiale des segments (37, 39), en particulier de leurs listeaux de battage (41), par rapport au tambour de battage (13), est différent et **en ce que** le premier segment (39), vu dans la direction de rotation (19) du tambour de battage (13), présente au moins un listeau de battage (41) relevé en direction de l'axe de rotation du tambour de battage (13).

2. Cage de battage selon la revendication 1, **caractérisée en ce que** :
- la cage de battage (17) présente un cadre (21) ;
- le cadre (21) est constitué de deux joues agencées latéralement (23) et d'au moins un élément de liaison (25) qui relie les joues (23) ; et
- le cadre (21) présente des éléments de guidage (31) et au moins un élément de verrouillage (33, 49, 51) pour les segments (37, 39).

3. Cage de battage selon la revendication 2, **caractérisée en ce que** les éléments de guidage (31) sont des barres profilées (31), en particulier des barres rondes, montées sur les joues (23), concentriquement à l'axe de rotation du tambour de battage (13).

4. Cage de battage selon la revendication 2, **caractérisée en ce que** les éléments de guidage (31) sont des gorges dans les joues (23), s'étendant concentriquement à l'axe de rotation du tambour de battage (13).

5. Cage de battage selon l'une des revendications précédentes, **caractérisée en ce que** ledit au moins un élément de verrouillage est une liaison vissée (33, 49, 31) agissant sur les segments (37, 39).

6. Cage de battage selon l'une des revendications précédentes, **caractérisée en ce que** les segments (37, 39) sont reliés le long de la ligne de division (40) par coopération de formes, en particulier via des goupilles de centrage (45) et des perçages de centrage (43).

7. Cage de battage selon l'une des revendications précédentes, **caractérisée en ce que** les segments (37, 39) présentent un cadre de segment périphérique (39) ainsi que des listeaux de battage (41) s'étendant parallèlement à l'axe de rotation du tambour de battage (13) et des fils métalliques (47) s'étendant perpendiculairement à ceux-ci.

8. Cage de battage selon l'une des revendications précédentes, **caractérisée en ce qu'**il est possible de placer une tôle de friction fermée dans le premier segment (39), vu dans la direction de rotation (19) du tambour de battage (13).

9. Cage de battage selon l'une des revendications 1 à 7, **caractérisée en ce que** le premier segment (39), vu dans la direction de rotation (19) du tambour de battage (13), est réalisé comme tôle de friction fermée.

10. Cage de battage selon l'une des revendications 7 à 9, **caractérisée en ce que** les distances des listeaux de battage (41) les uns par rapport aux autres diffèrent.

11. Cage de battage selon l'une des revendications précédentes, **caractérisée en ce qu'**il est possible d'ajuster la distance radiale entre la cage de battage (17) et le tambour de battage (13).

12. Cage de battage selon l'une des revendications 2 à 11, **caractérisée en ce que** l'élément de liaison (25) du cadre (21) est agencé sur l'extrémité arrière des joues (23), vu dans la direction de rotation (19) du tambour de battage (13), et **en ce que** ledit au moins un élément de verrouillage (33, 49, 51) est agencé sur l'extrémité avant d'au moins une joue (23).

## Claims

1. Threshing basket for a threshing mechanism (7) of a combine harvester (1), wherein the threshing mechanism (7) comprises a threshing drum (13) and a threshing basket (17), wherein the threshing basket (17) has a threshing basket surface which is curved essentially coaxially to the axis of rotation of the threshing drum (13) and wherein the threshing basket surface is divided into at least two segments (37, 39) and the dividing line (40) between the at least two segments (37, 39) runs essentially parallel to the axis of rotation of the threshing drum (13), **characterized in that** the radial distance of the segments (37, 39), in particular of the threshing strips (41) thereof, from the threshing drum (13) is different, and **in that** the first segment (39), as seen in the direction of rotation (19) of the threshing drum (13), has at least one threshing strip (41) which is raised in the direction of the axis of rotation of the threshing drum (13).

2. Threshing basket according to Claim 1, **characterized in that** the threshing basket (17) has a frame (21), **in that** the frame (21) consists of two cheeks (23) arranged at the sides and at least one connecting element (25) which connects the cheeks (23), and **in that** the frame (21) has guide elements (31) and at least one locking element (33, 49, 51) for the segments (37, 39).

3. Threshing basket according to Claim 2, **characterized in that** the guide elements (31) are profile bars (31), in particular round bars, which are fitted on the cheeks (23) concentrically to the axis of rotation of the threshing drum (13).

4. Threshing basket according to Claim 2, **characterized in that** the guide elements (31) are grooves in the cheeks (23) which run concentrically to the axis of rotation of the threshing drum (13).

5. Threshing basket according to any of the preceding claims, **characterized in that** the at least one locking element is a screw connection (33, 49, 51) which acts on the segments (37, 39).

6. Threshing basket according to any of the preceding claims, **characterized in that** the segments (37, 39) are connected in a form-fitting manner along the dividing line (40), in particular by means of centring pins (45) and centring holes (43).

7. Threshing basket according to any of the preceding claims, **characterized in that** the segments (37, 39) have a peripheral segment frame (39) and also threshing strips (41) which run parallel to the axis of rotation of the threshing drum (13) and wires (47) which run perpendicular to said threshing strips.

8. Threshing basket according to any of the preceding claims, **characterized in that** a closed rubbing plate can be placed in the first segment (39), as seen in the direction of rotation (19) of the threshing drum (13).

9. Threshing basket according to any of Claims 1 to 7, **characterized in that** the first segment (39), as seen in the direction of rotation (19) of the threshing drum (13), is designed as a closed rubbing plate.

10. Threshing basket according to any of Claims 7 to 9, **characterized in that** the distances of the threshing strips (41) from one another are different.

11. Threshing basket according to any of the preceding claims, **characterized in that** the radial distance between threshing basket (17) and threshing drum (13) can be adjusted.

12. Threshing basket according to any of Claims 2 to 11, **characterized in that** the connecting element (25) of the frame (21) is arranged at the rear end of the cheek (23) as seen in the direction of rotation (19) of the threshing drum (13), and **in that** the at least one locking element (33, 49, 51) is arranged at the front end of at least one cheek (23).
